Europäisches Patentamt

European Patent Office

Office européen des brevets

(11) Numéro de publication: **0 225 959**
**A1**

## (12) DEMANDE DE BREVET EUROPEEN

(21) Numéro de dépôt: **85870175.8**

(22) Date de dépôt: **10.12.85**

(51) Int. Cl.⁴: **H04L 9/00** , H04L 11/26

(43) Date de publication de la demande:
**24.06.87 Bulletin 87/26**

(84) Etats contractants désignés:
**AT BE CH DE FR GB IT LI LU NL SE**

(71) Demandeur: **ATELIERS DE CONSTRUCTIONS ELECTRIQUES DE CHARLEROI (ACEC) Société Anonyme Avenue Lloyd George 7 B-1050 Bruxelles(BE)**

(72) Inventeur: **Colard, Dominique 21, rue Gillemont B-6428 Ham-Sur-Heure(BE)**

(54) **Procédé et dispositif de cryptage et de décryptage pour communications entre un utilisateur et un ordinateur par le réseau téléphonique, sous forme vocale dans le sens ordinateur-utilisateur et sous forme de codes fréquentiels dans le sens utilisateur-ordinateur.**

(57) Le procédé et le dispositif de cryptage et de décryptage des communications téléphoniques entre un utilisateur du réseau téléphonique et un ordinateur central lorsque ces communications sont faites sous forme vocale dans le sens ordinateur-utilisateur et sous forme de codes fréquentiels dans le sens utilisateur-ordinateur se caractérisent par un gestionnaire (7) qui calcule la clef de codage au départ de plusieurs "mots de passe" de diverses origines, pour l'appliquer à un algorithme de conversion permettant de crypter les signaux formés à l'aide du clavier (6) en signaux codés transmis à un générateur (10) émettant en codes fréquentiels.

Fig. 2

EP 0 225 959 A1

## PROCEDE ET DISPOSITIF DE CRYPTAGE ET DE DECRYPTAGE POUR COMMUNICATIONS ENTRE UN UTILISATEUR ET UN ORDINATEUR PAR LE RESEAU TELEPHONIQUE, SOUS FORME VOCALE DANS LE SENS ORDINATEUR-UTILISATEUR ET SOUS FORME DE CODES FREQUENTIELS DANS LE SENS UTILISATEUR-ORDINATEUR

L'invention concerne un dispositif de cryptage et de décryptage pour les dialogues entre un utilisatuer et un ordinateur par le réseau téléphonique.

Elle trouve notamment son champ d'application dans les liaisons entre les utilisateurs du réseau téléphonique et les instituts bancaires qui cherchent à garantir à l'utilisateur le secret de la conversation. Il existe de nombreuses méthodes d'accès par téléphone et réseau commuté à des données informatiques et d'échanges entre un utilisateur du réseau téléphonique et un ordinateur central sous forme vocale dans le sens ordinateur-utilisateur et sous forme de codes fréquentiels dans le sens utilisateur-ordinateur. Les commandes à la disposition de l'utilisateur et destinées à l'ordinateur sont généralement transmises par des codes fréquentiels normalisés dans la bande des fréquences vocales (DTMF). L'appelant doit donc disposer soit d'un téléphone à signalisation DTMF soit d'un générateur DTMF indépendant à appliquer contre le microphone du cornet ou couplé en parallèle sur la ligne de son téléphone à impulsions. Ces générateurs DTMF, par couplage acoustique ou filaire, génèrent les fréquences nécessaires à la transmission de chiffres, de lettres et de symboles normalisés.

Ce système comporte entre le central téléphonique et l'ordinateur un interface appelé frontal dont les principales fonctions sont de détecter un appel téléphonique, d'effectuer une guidance d'accueil, de décoder les commandes reçues sous forme de codes fréquentiels DTMF et de les transmettre à l'ordinateur, de recevoir de l'ordinateur des ordres de diverses natures, les interpréter et les exécuter, d'effectuer le traitement de la parole. Jusqu'à présent, ces conversations entre l'utilisateur du réseau téléphonique et l'ordinateur sont effectuées en "clair" c'est-à-dire qu'elles sont accessibles et reproductibles par toute personne même non autorisée.

La présente invention a pour but de remédier à ces inconvénients.

L'invention résout le problème en garantissant l'identification de l'utilisateur par l'ordinateur, en garantissant le secret des informations transmises par l'utilisateur et en empêchant toute reproduction d'une communication enregistrée lors d'une liaison précédente entre un utilisateur et l'ordinateur. Toutes ces garanties sont accordées au départ d'une implantation téléphonique existante. L'invention, telle qu'elle est caractérisée dans les revendications, utilise, pour le cryptage et le décryptage de communications téléphoniques sous forme de codes fréquentiels dans le sens utilisateur-ordinateur, un algorithme de conversion qui s'applique à une clef de codage calculée sur base d'un premier "mot de passe" attribué par l'ordinateur, d'un deuxième "mot de passe" donné par l'utilisateur et d'un éventuel troisième "mot de passe" affecté au dispositif de l'utilisateur.

En plus, du fait d'assurer la confidentialité de cette transmission, l'invention offre l'avantage d'un faible coût de réalisation. Ces résultats sont obtenus au moyen d'un cryptage au niveau du dispositif émetteur de l'utilisateur du réseau téléphonique et d'un décryptage au niveau du frontal lié à l'ordinateur.

L'invention est exposée ci-après plus en détail à l'aide des dessins représentant un mode d'exécution.

La figure 1 montre un schéma d'ensemble.

La figure 2 représente un schéma du dispositif d'émission de l'utilisateur.

La figure 3 représente les éléments affectés au frontal de l'ordinateur de la messagerie.

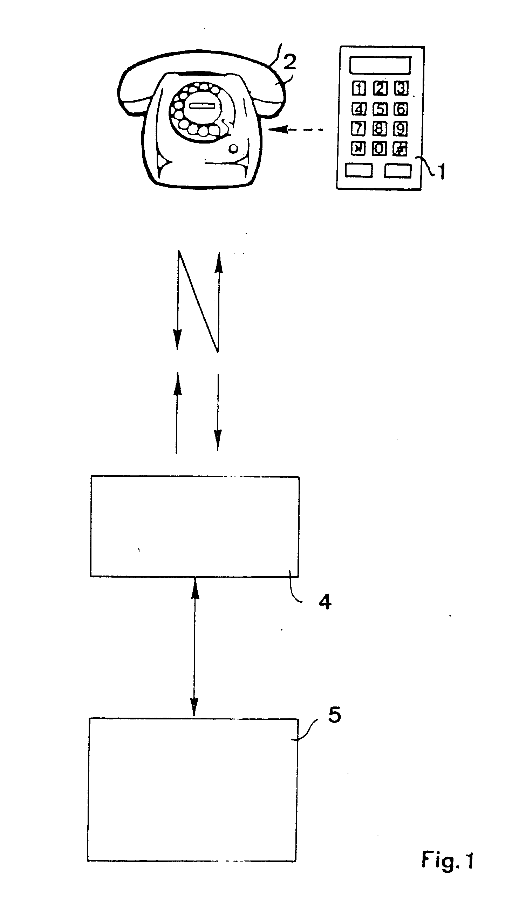

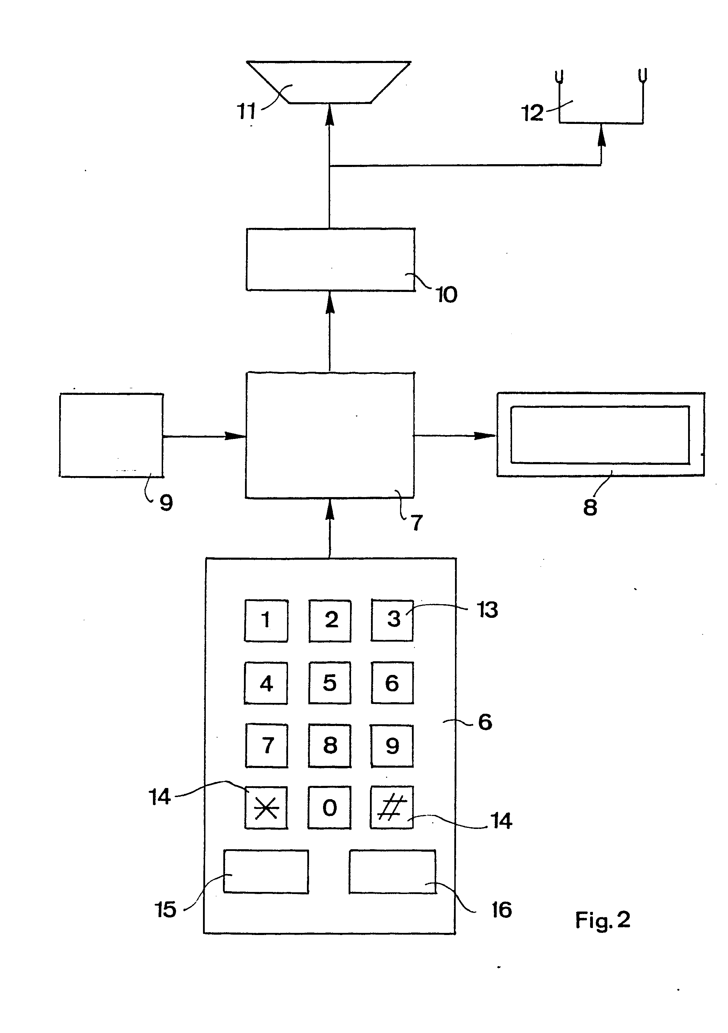

La figure 1 montre un dispositif d'émission 1 adaptable à un cornet 2 d'un appareil téléphonique 3 qui permet d'envoyer des signaux cryptés en codes fréquentiels vers un frontal 4 d'un ordinateur 5. Ces signaux sont décryptés dans le frontal 4 et transmis à l'ordinateur 5. En retour, l'utilisateur reçoit, par le cornet 2 de son appareil téléphonique 3, des signaux vocaux, parfaitement intelligibles, engendrés dans le frontal 4 suivant les ordres reçus de l'ordinateur 5. La figure 2 représente le schéma d'un dispositif d'émission de l'utilisatuer. Un dispositif d'émission 1 est constitué d'un clavier 6, servant à former des nombres non codés, d'un gestionnaire 7, dont les fonctions seront détaillées ultérieurement, d'un afficheur 8, pour permettre à l'utilisateur de contrôler les nombres formés sur le clavier 6, d'un élément à mémoire non volatile 9, qui garde en mémoire un nombre secret propre à chaque dispositif d'émission, d'un générateur 10, chargé de transformer les nombres codés fournis par le gestionnaire 7 en codes fréquentiels transmis à un haut-parleur 11 accolé au micro du cornet 2 de l'appareil téléphonique 3.

Le gestionnaire 7 est respectivement connecté au clavier 6 dont il reçoit des nombres non codés, à l'afficheur 8 auquel il transmet des nombres non codés, à l'element à mémoire 9 duquel il reçoit un nombre secret, et au générateur 10 auquel il fournit des nombres codés. Le générateur 10 peut également être raccordé par un couplage filaire 12 au réseau téléphonique.

Le clavier 6 est muni dans l'exemple de réalisation de la figure 1 de touches 13 portant les dix chiffres, de touches 14 portant des symboles normalisés, d'une touche 15 permettant à l'utilisateur d'introduire son code secret et d'une touche 16 par laquelle l'utilisateur pourra introduire dans le gestionnaire 7 un nombre, désignant la conversation engagée, communiqué par le frontal 4 de l'ordinateur à travers le réseau téléphonique.

Les diverses fonctions du gestionnaire 7 sont de gérer le clavier 6, d'indiquer sur l'afficheur 8 les nombres composés sur le clavier 6, de lire le nombre secret stocké dans l'élément à mémoire, de calculer la clef de codage, d'appliquer le mode de cryptage sur base d'un algorithme de conversion pour crypter les données introduites au clavier 6, de commander le générateur 10.

Lorsque l'utilisateur s'est mis en communication avec le frontal 4 de l'ordinateur et qu'il a décliné son identité, il compose alors, à l'aide des touches 13 et de la touche 15, son code secret qui constitue un premier "mot de passe" introduit dans le gestionnaire 7. L'utilisateur compose ensuite, à l'aide des touches 13 et de la touche 16, le numéro de conversation communiqué en signaux vocaux intelligibles par le frontal 4 de l'ordinateur, ce nombre ainsi composé constitue le deuxième "mot de passe" introduit dans le gestionnaire 7. Le troisième "mot de passe" correspond à un nombre secret affecté au dispositif d'émission 1 et est communiqué au gestionnaire 7 à l'insu de l'utilisateur lui-même. Ce "mots de passe" sont stockés dans le gestionnaire : ils ne sont transmis ni à l'afficheur 8 ni au générateur 10.

Dès que le gestionnaire est en possession des trois "mots de passe", à savoir : le code secret de l'utilisateur, le code secret du dispositif d'émission 1 et le nombre attribué à la conversation en cours, il calcule la clef de codage et applique le mode de cryptage sur base d'un algorithme de conversion de manière à coder toutes les données ultérieures qui lui seront communiquées par le clavier 6 et qu'il transmettra sous forme de nombres codés au générateur 10.

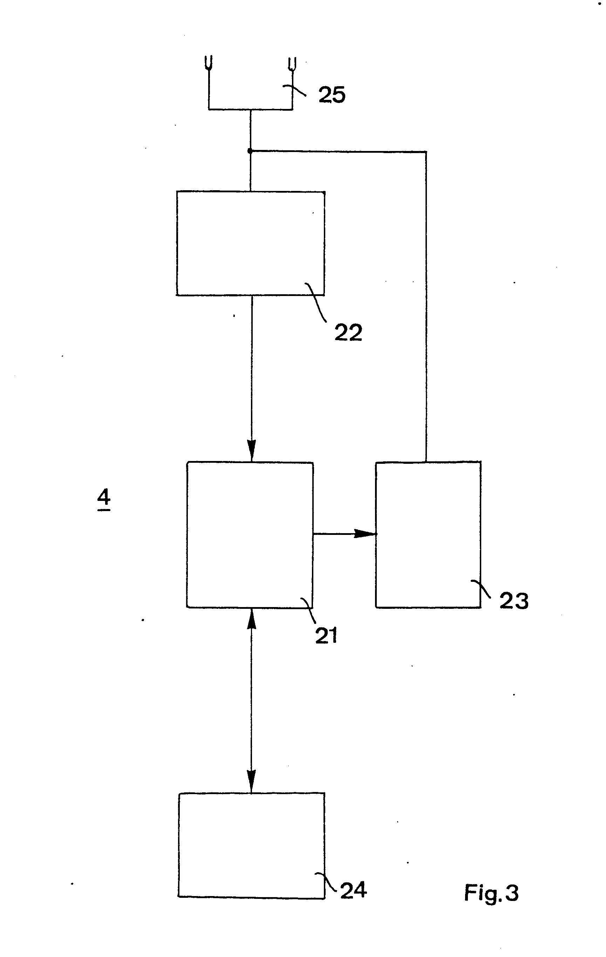

Dans une première vaiante du dispositif d'émission 1 montré en figure 2, l'algorithme de conversion peut être évolutif à chaque chiffre émis. Dans une seconde variante du dispositif d'émission 1 montré en figure 2, le dispositif d'émission 1 peut ne pas être affecté d'un "mot de passe". Selon cette variante le gestionnaire 7 dispose d'un premier "mot de passe" correspondant au code secret de l'utilisateur et d'un second "mot de passe" correspondant au nombre attribué à la conversation en cours. La figure 3 représente le schéma bloc du frontal 4 de l'ordinateur. Un gestionnaire 21 est respectivement connecté à un convertisseur 22, à un synthétiseur de parole 23 et à un interface ordinateur 24.

Les codes fréquentiels issus du dispositif d'émission 1 parviennent au frontal 4 de l'ordinateur par une liaison filaire 25 du réseau téléphonique sous forme de messages codés. Le convertisseur 22 est chargé de transformer ces codes fréquentiels en nombres codés qu'il transmet en gestionnaire 21. Les différentes fonctions du gestionnaire 21 sont de calculer la clef de décodage à l'aide des trois "mots de passe" : à savoir, le code secret de l'utilisateur en ligne, le code secret du dispositif d'émission utilisé et le numéro de la conversation engagée, d'appliquer le mode de décryptage de manière à décoder toutes les données ultérieures, de transmettre à l'interface ordinateur 24 les messages décryptés, de recevoir les ordres de l'ordinateur et de les transmettre au synthétiseur à parole 23 pour que ce dernier transforme ces ordres en signaux vocaux intelligibles.

## Revendications

1. Procédé de cryptage et de décryptage des communications téléphoniques entre un utilisateur du réseau téléphonique et un ordinateur central, ces communications étant faites sous forme vocale dans le sens ordinateur-utilisateur et sous forme de codes fréquentiels dans le sens utilisateur-ordinateur

caractérisé en ce qu'un algorithme de conversion s'applique à une clef de codage calculée sur base d'un premier "mot de passe" attribué par l'ordinateur central (4,5) d'un deuxième "mot de passe" donné par l'utilisateur et d'un éventuel troisième "mot de passe" affecté à l'appareil de l'utilisateur.

2. Procédé de cryptage et de décryptage selon la revendication 1 caractérisé en ce que l'algorithme de conversion est évolutif durant la conversation engagée.

3. Dispositif de cryptage appelé dispositif d'émission (1) appliquant le procédé de cryptage d'une des revendications précédentes comportant un clavier (6), un afficheur (8), un générateur (10) émettant des signaux en codes fréquentiels vers un haut-parleur (11) ou une liaison filaire (12) caractérisé en ce qu'un gestionnaire (7) connecté respectivement au clavier (6) dont il reçoit des nombres non codés, à un élément à mémoire (9) duquel il reçoit un nombre secret attribué au dispositif d'émission (1 ) et au générateur (10) auquel il fournit des nombres codés pour être transformés en codes fréquentiels, calcule une clef de codage au départ de trois "mots de passe" représentés respectivement par le code secret de l'utilisateur, le code secret du dispositif d'émission (1), le numéro attribué par l'ordinateur (4,5) à la conversation engagée, applique à la clef de codage ainsi calculée un algorithme de conversion pour établir un mode de cryptage entre les nombres introduits au clavier (6) et les nombres émis vers le générateur (10), commande un générateur (14) pour provoquer une émission en codes fréquentiels.

4. Dispositif de cryptage appelé dispositif d'émission (1) appliquant le procédé de cryptage des revendications 1 ou 2 comportant un clavier - (6), un afficheur (8), un générateur (10) émettant des signaux en codes fréquentiels vers un haut-parleur (11) ou une liaison ou une liaison filaire - (12) caractérisé en ce qu'un gestionnaire (7) connecté respectivement au clavier (6) dont il reçoit des nombres non codés,et un générateur - (10) auquel il fournit des nombres codés pour être transformés en codes fréquentiels, calcule une clef de codage au départ de deux "mots de passe" représentés respectivement par le code secret de l'utilisateur, et par le numéro attribué par l'ordinateur (4,5) à la conversation engagée, applique à la clef de codage ainsi calculée un algorithme de conversion pour établir un mode de cryptage entre les nombres introduits au clavier (6) et les nombres émis vers le générateur (10), commande un générateur (14) pour provoquer une émission en codes fréquentiels.

5. Dispositif de cryptage selon les revendications 3 ou 4

caractérisé en ce que le gestionnaire (7) est connecté à l'afficheur (8) auquel il transmet les nombres non codés introduits par le clavier 6).

6. Dispositif de décryptage appliquant le procédé de décryptage de la revendication 1 ou de la revendication 2

caractérisé en ce que ce dispositif comprend un gestionnaire (21), respectivement connecté d'un convertisseur (22) qui transforme les codes fréquentiels en nombres codés, à un interface ordinateur (24) auquel le dit gestionnaire (21) transmet des messages décodés et duquel il reçoit des ordres, à un synthétiseur de parole (23) auquel il transmet les ordres reçus de l'interface ordinateur - (24), ce dit gestionnaire (21) calcule la clef de décodage à l'aide de deux ou de trois "mots de passe" représentés respectivement par le code secret de l'utilisateur en ligne, l'éventuel code secret du dispositif d'émission utilisé et le numéro de la conversation engagée, applique à la clef de décodage ainsi calculée un algorithme de conversion pour établir le mode de décryptage entre les nombres reçus et les nombres émis par le gestionnaire 21, transmet à l'interface ordinateur 24 les messages décryptés, reçoit les ordres de l'ordinateur (5) et les transmet au synthétiseur de parole (23) pour que le dit synthétiseur de parole (23) transforme ces ordres en signaux vocaux intelligibles

et en ce que ce dispositif comprend une liaison filaire (26) qui reçoit des messages en codes fréquentiels et les transmet au convertisseur (22)

Fig. 1

Fig. 2

Fig.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | ELECTRONICS, vol. 57, no. 5, mars 1984, pages 131-135, New York, US; J. SMITH: "Call-back schemes ward off unwanted access by telephone" <br> * Page 131, colonne de gauche, lignes 1-7; page 131, dernier alinéa - colonne de droite, ligne 8; page 134, colonne de droite, dernière ligne - page 135, colonne de gauche, ligne 4; page 135, colonne de droite, lignes 32-33 * | 1 | H 04 L    9/00 <br> H 04 L   11/26 |
| Y | WO-A-8 302 376  (TSAKANIKAS) <br> * Page 7, ligne 16  - page 8, ligne 21 * | 1 | |
| Y | GB-A-2 050 021  (ATALLA) <br> * Page 3, lignes 7-110 * | 1 | |
| A | | 3 | |
| A | GB-A-2 139 457  (VISA) <br> * Page 1, lignes 101-111; page 2, lignes 95-113; page 2, ligne 123 - page 3, ligne 53 * | 1 | |
| A | GB-A-2 154 393  (STANDARD TELEPHONES) <br> * Page 1, lignes 75-82; abrégé * | 1,3 | |

DOMAINES TECHNIQUES
RECHERCHES (Int. Cl.4)

H 04 L
H 04 M
G 07 F

Le présent rapport de recherche a été établi pour toutes les revendications

| Lieu de la recherche | Date d'achèvement de la recherche | Examinateur |
|---|---|---|
| LA HAYE | 08-08-1986 | HOLPER G.E.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82